# EUROPÄISCHE PATENTSCHRIFT

(11) **EP 3 624 310 B1**
(45) Veröffentlichungstag und Bekanntmachung des Hinweises auf die Patenterteilung: **03.11.2021**
(21) Anmeldenummer: 18193689.9
(22) Anmeldetag: 11.09.2018
(51) Int. Cl.: H02K 3/34, H02K 3/38, H02K 3/52

(54) **STATOR MIT KOMPAKTER ISOLATION SOWIE VERFAHREN ZUR HERSTELLUNG EINES SOLCHEN STATORS**
STATOR WITH COMPACT ISOLATION AND METHOD FOR MANUFACTURING SUCH A STATOR
STATOR À ISOLATION COMPACTE AINSI QUE PROCÉDÉ DE FABRICATION D'UN TEL STATOR

(43) Veröffentlichungstag der Anmeldung: 18.03.2020
(73) Patentinhaber: maxon international ag, 6072 Sachseln (CH)
(72) Erfinder: Imfeld, Stefan, 6074 Giswil (CH); Rohrer, Richard, 6072 Giswil (CH); Kang, Jihye, 6074 Giswil (CH); Marti, Fridolin, 6004 Luzern (CH)
(74) Vertreter: Grünecker Patent- und Rechtsanwälte PartG mbB

(56) Entgegenhaltungen:
- EP-A2- 2 372 879
- WO-A1-2017/175508
- WO-A2-2014/095819
- JP-A- 2001 112 205
- JP-A- 2003 111 329
- JP-A- 2005 130 540
- JP-B2- 4 261 173

## Beschreibung

Die vorliegende Erfindung betrifft einen Stator für einen mehrpoligen bürstenlosen Innenläufermotor nach dem Oberbegriff des unabhängigen Anspruchs 1.

Ein gattungsgemäßer Stator weist einen aus Statorblechen zusammengesetzten Statorrückschluss auf, der einen hohlen Rückschlusskörper mit mehreren, bezogen auf eine Achse des Stators radial nach innen abstehenden Statorzähnen aufweist, die zwischen sich Statornuten definieren und jeweils mit einer Statorspule bewickelt sind. Zur elektrischen Isolierung zwischen Statorrückschluss und Statorspulen ist Isolationspapier zwischen den Statorspulen und den Statornuten eingelegt. Die beiden axialen Enden des Statorrückschlusses sind zur elektrischen Isolierung jeweils mit einer Kunststoffabdeckung abgedeckt. Die Statorzähne weisen an den axialen Enden des Statorrückschlusses seitliche Aussparungen auf, durch die sich eine in Umfangsrichtung gemessene Breite der Statorzähne reduziert. Entsprechende Vorsprünge der Kunststoffabdeckung greifen in die Aussparungen ein, wobei die Statorbleche als einteilige ringförmige Statorbleche mit radial nach innen abstehenden Zähnen ausgebildet und zu einem Blechpaket zusammengesetzt sind, wobei die Kunststoffabdeckung ebenfalls einteilig ausgeführt ist.

Ein Stator nach dem Oberbegriff des unabhängigen Anspruchs 1 ist beispielsweise aus JP 2001 112205 A bekannt.

Ein anderer Stator mit Kunststoffabdeckungen ist unteranderem aus WO 2017/175508 A1 bekannt. Dieses Dokument beschreibt einen Stator, der aus mehreren Statorsegmenten zusammengesetzt wird. Jedes Statorsegment umfasst einen Statorzahn sowie ein entsprechendes Teilstück des hohlen Rückschlusskörpers. Die Statorsegmente werden vor dem Zusammenbau der Statorbaugruppe einzeln mit Isolationspapier und entsprechenden Kunststoffabdeckungen versehen und auch einzeln bewickelt. Die Verwendung von Isolationspapier hat den Vorteil, dass die Isolation wenig Bauraum in Anspruch nimmt. Durch die Aussparungen der Statorzähne an den beiden axialen Enden des Statorrückschlusses wird erreicht, dass die Kunststoffabdeckungen bzw. deren Vorsprünge nicht in den Wickelraum hineinragen. Dadurch wird insgesamt eine sehr kompakte Isolation, und somit ein hoher Füllgrad der Spulen erreicht. Der aus WO 2017/175508 A1 bekannte Statoraufbau und das entsprechende Herstellungsverfahren haben ferner den entscheidenden Vorteil, dass die Statorspulen besonders einfach auf die Statorzähne gewickelt werden können.

Mehrpolige bürstenlose Innenläufermotoren mit eisenbehafteten Wicklungen zeichnen sich durch ein hohes Drehmoment aus. Um die Drehmomentdichte des Motors zu maximieren, müssen die Spulen der Statorwicklung einen möglichst hohen Füllgrad aufweisen. Damit möglichst viele Windungen um die Statorzähne gewickelt werden können, ist es bei derartigen Motoren daher besonders wichtig, dass die Isolation des Statorrückschlusses möglichst wenig Wickelraum beansprucht.

Aufgabe der vorliegenden Erfindung ist es, einen Stator der gattungsgemäßen Art anzugeben, der sich besonders gut für einen mehrpoligen bürstenlosen Innenläufermotor eignet, einen hohen Füllgrad ermöglicht und sich wirtschaftlich herstellen lässt.

Die Aufgabe wird gelöst durch die Merkmale der unabhängigen Ansprüche 1 und 11.

Demnach liegt bei einem Stator nach dem Oberbegriff des unabhängigen Anspruchs 1 dann eine erfindungsgemäße Lösung der Aufgabe vor, wenn sich die Kunststoffabdeckungen bzw. deren Vorsprünge nicht mit dem Isolationspapier überlagern sondern axial an das Isolationspapier anschließen.

Es hat sich herausgestellt, dass erfindungsgemäße Statoren, insbesondere für kleine und besonders kleine mehrpolige bürstenlose Innenläufermotoren, besonders wirtschaftlich hergestellt werden können, obwohl die Möglichkeit, Statorsegmente einzeln zu bewickeln, bei der erfindungsgemäßen Lösung nicht gegeben ist. Durch die erfindungsgemäße Lösung kann ein hoher Füllgrad erreicht werden, was zu einem hohen Wirkungsgrad und einer hohen Drehmomentdichte führt. Zu einem sehr guten Wirkungsgrad trägt auch bei, dass die Statorbleche als einteilige ringförmige Statorbleche ausgebildet sind, und der magnetische Fluss optimal geführt werden kann. Durch die erfindungsgemäße Bauweise können auf einfache Weise zudem unterschiedliche Baulängen (axiale Länge des Statorrückschlusses) realisiert werden. Außerdem ergibt sich eine besonders einfache und kostengünstige Herstellung. Ferner können die Aussparungen der Statorzähne an den axialen Enden des Statorrückschlusses besonders schmal gehalten werden, was sich günstig auf die Führung des magnetischen Flusses auswirkt.

Die Statorbleche werden vorzugsweise einzeln ausgestanzt und mittels üblicher Paketierverfahren zu einem Blechpaket bzw. zu dem Statorrückschluss zusammengesetzt. Hierzu eignet sich mechanisches Verknüpfen der Statorbleche wie beispielsweise Stanzpaketieren genauso wie Laserpaketieren oder Klebpaketieren. Die Statorbleche werden vorzugsweise aus weichmagnetischem Blech hergestellt, das weiter vorzugsweise beidseitig isoliert ist.

Als Isolationspapier können alle gängigen Arten von Isolationspapier eingesetzt werden, welche die jeweiligen Anforderungen an die Isolationswirkung erfüllen. Vorzugsweise kommt ultradünnes Isolationspapier mit einer Dicke unter 0,1 mm, vorzugsweise von 0,08 mm ±10% zum Einsatz. Derartiges Isolationspapier wird beispielsweise unter der Bezeichnung "Nomex 410" von DuPont angeboten. Das Isolationspapier wird vorzugsweise in axialer Richtung in die Statornuten eingeschoben. Sofern nicht anders angegeben, beziehen sich Bezeichnungen wie "radial", "axial" und "in Umfangsrichtung" auf die Achse des Stators.

Bei den seitlichen Aussparungen der Statorzähne an den axialen Enden des Statorrückschlusses handelt es sich in anderen Worten um einseitig offene Nuten bzw. stufenförmige Rücksprünge, in welche die Vorsprünge der Kunststoffabdeckungen eingreifen. Die Vorsprünge der Kunststoffabdeckungen sind stegartig und füllen die Ausnehmungen vorzugsweise nahezu vollständig aus.

Vorteilhafte Ausführungsformen der vorliegenden Erfindung sind Gegenstand der Unteransprüche.

Gemäß einer bevorzugten Ausführungsform der vorliegenden Erfindung weist ein erstes Querschnittsprofil, gebildet aus einem der Statorzähne und den jeweils zugehörigen in die Aussparungen eingreifenden Vorsprüngen der Kunststoffabdeckung, eine in Umfangsrichtung gemessene erste Breite auf, die maximal einer ebenfalls in Umfangsrichtung gemessenen zweiten Breite eines zweiten Querschnittsprofils desselben Statorzahns an einer axialen Position entspricht, an welcher die in Umfangsrichtung gemessene Breite des Statorzahns nicht durch die Aussparungen reduziert ist. Dadurch wird verhindert, dass die Kunststoffabdeckung bzw. deren Vorsprünge den Statorzahn an den beiden axialen Enden des Statorrückschlusses verbreitern. Mit anderen Worten ragen die Vorsprünge der Kunststoffabdeckung nicht in die Statornuten hinein. Somit wird der Wickelraum für die Spulen der Statorwicklung durch die Kunststoffabdeckung nicht verkleinert.

In einer besonders bevorzugten Ausführungsform der vorliegenden Erfindung entspricht die erste Breite der zweiten Breite. Die Statorzähne weisen somit über die gesamte Länge und damit auch an den durch die Kunststoffabdeckungen gebildeten Enden ein und dieselbe Breite auf.

Gemäß einer weiteren bevorzugten Ausführungsform der vorliegenden Erfindung wird das zweite Querschnittsprofil durch den jeweiligen Statorzahn und das zugehörige Isolationspapier gebildet.

Gemäß einer weiteren bevorzugten Ausführungsform der vorliegenden Erfindung weist jeder Statorzahn an seinem radial innen gelegenen Ende zwei in Umfangsrichtung abstehende Nasen auf, wobei die Nasen jeweils eine Spitze aufweisen, und wobei sich die seitlichen Aussparungen der Statorzähne und die entsprechenden Vorsprünge der Kunststoffabdeckung zumindest abschnittsweise auch entlang der Nasen erstrecken. Dadurch wird zum einen eine verbesserte Isolation erreicht. Zum anderen wird dadurch auch ein besserer Zusammenhalt zwischen Statorrückschluss und Kunststoffabdeckung erreicht. Die Nasen eines Statorzahns stehen in entgegengesetzten Richtungen von dem jeweiligen Statorzahn ab. Die Spitzen der Nasen markieren die größte Ausdehnung der Nasen in Umfangsrichtung.

Gemäß einer besonders bevorzugten Ausführungsform der vorliegenden Erfindung erstrecken sich die Aussparungen nicht bis zu den Spitzen der Nasen sondern enden jeweils kurz davor. Dadurch können die Statorbleche bei der Herstellung des Blechpakets besser fixiert bzw. zueinander ausgerichtet werden. Dadurch ist es möglich, ein möglichst präzise gestapeltes Blechpaket herzustellen.

Gemäß einer weiteren bevorzugten Ausführungsform der vorliegenden Erfindung erstrecken sich die Aussparungen und die entsprechenden Vorsprünge der Kunststoffabdeckung zumindest abschnittsweise auch entlang einer Innenseite des Rückschlusskörpers. Dadurch werden Isolation und Zusammenhalt weiter verbessert.

Gemäß einer weiteren bevorzugten Ausführungsform der vorliegenden Erfindung ist ein Nutgrund der Statornuten bezogen auf die Achse des Stators nach außen gewölbt. Dadurch wird ein möglichst großer Wicklungsraum bereitgestellt, so dass die auf die Statorzähne gewickelten Spulen eine sehr hohe Windungszahl aufweisen können. Dadurch kann wiederum die Drehmomentdichte erhöht werden. Besonders bevorzugt ist der Nutgrund dabei durch einen Abschnitt einer zylindrischen Innenseite des hohlen Rückschlusskörpers gebildet.

Gemäß einer weiteren bevorzugten Ausführungsform der vorliegenden Erfindung sind die Aussparungen in zumindest zwei der am jeweiligen axialen Ende gelegenen Statorbleche des Blechpakets ausgebildet. Dadurch ergibt sich ein einfacher aber auch stabiler Aufbau des erfindungsgemäßen Stators.

Die vorliegende Erfindung stellt auch ein Verfahren zur Herstellung des erfindungsgemäßen Stators bereit. Gemäß dem erfindungsgemäßen Verfahren werden zunächst einteilige ringförmige Statorbleche mit radial nach innen abstehenden Zähnen zu einem Blechpaket zusammengesetzt, sodass ein Statorrückschluss gebildet wird, der einen hohlen Rückschlusskörper mit mehreren, bezogen auf eine Achse des Stators radial nach innen abstehenden Statorzähnen aufweist, die zwischen sich Statornuten definieren, wobei die Statorzähne an den axialen Enden des Statorrückschlusses seitliche Aussparungen aufweisen, durch die sich eine in Umfangsrichtung gemessene Breite der Statorzähne reduziert. In einem nächsten Schritt wird anschließend zur elektrischen Isolierung zwischen dem Statorrückschluss und den auf die Statorzähne zu wickelnden Statorspulen Isolationspapier in die Statornuten eingelegt und die beiden axialen Enden des Statorrückschlusses werden jeweils mit einer einteiligen Kunststoffabdeckung abgedeckt, sodass entsprechende Vorsprünge der Kunststoffabdeckung in die Aussparungen eingreifen. Anschließend werden die Statorzähne jeweils mit einer Statorspule bewickelt.

Gemäß einer bevorzugten Ausführungsform des erfindungsgemäßen Verfahrens wird das Isolationspapier bezogen auf die Achse des Stators in axialer Richtung in die Statornuten eingeschoben. Dies vereinfacht die Herstellung des erfindungsgemäßen Stators und kann manuell oder maschinell erfolgen. Die Isolationspapiere werden davor entsprechend in Form gebogen bzw. gefaltet, so dass sie sich optimal an die Statornuten anlegen.

Ein Ausführungsbeispiel der vorliegenden Erfindung wird im Folgenden anhand von Zeichnungen näher erläutert.

Es zeigen:
- Figur 1:: einen erfindungsgemäßen Stator in einer perspektivischen Explosionsdarstellung ohne Darstellung der Statorspulen,
- Figur 2:: eine Detailansicht des Statorrückschlusses und einer der beiden Kunststoffabdeckungen des erfindungsgemäßen Stators aus Figur 1, ebenfalls in einer perspektivischen Explosionsdarstellung,
- Figur 3:: eine Draufsicht auf eines der beiden axialen Enden des Statorrückschlusses,
- Figur 4:: eine Draufsicht auf eines der beiden axialen Enden des fertiggestellten erfindungsgemäßen Stators, und
- Figur 5:: einen Längsschnitt durch einen der Statorzähne des erfindungsgemäßen Stators entlang der in Figur 4 eingezeichneten Schnittlinie V.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

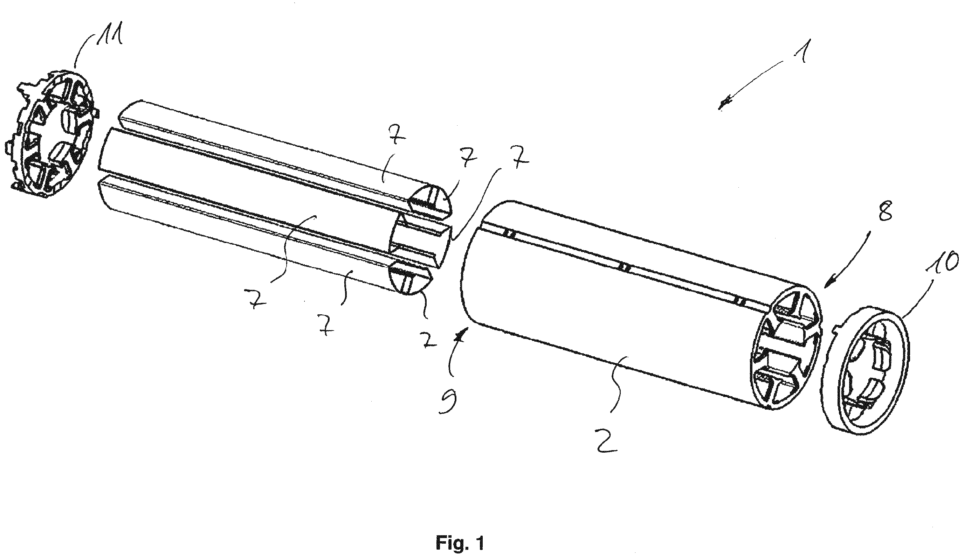

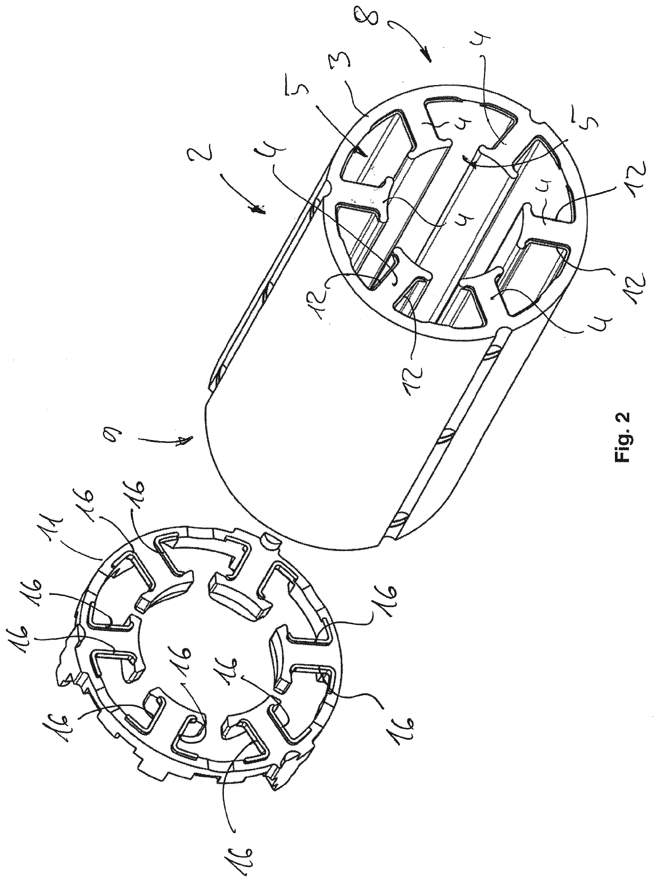

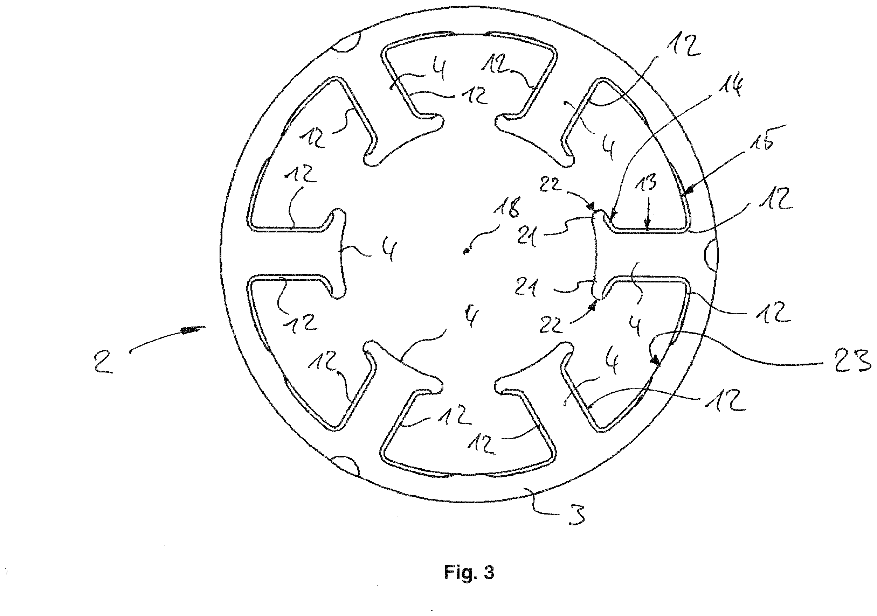

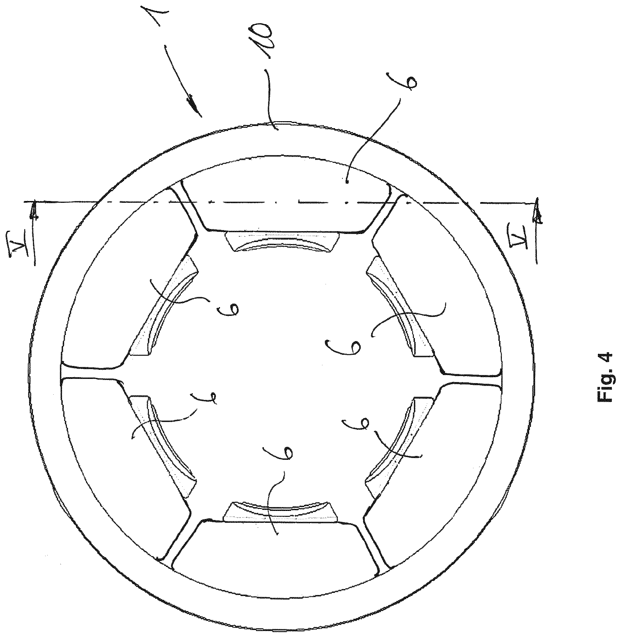

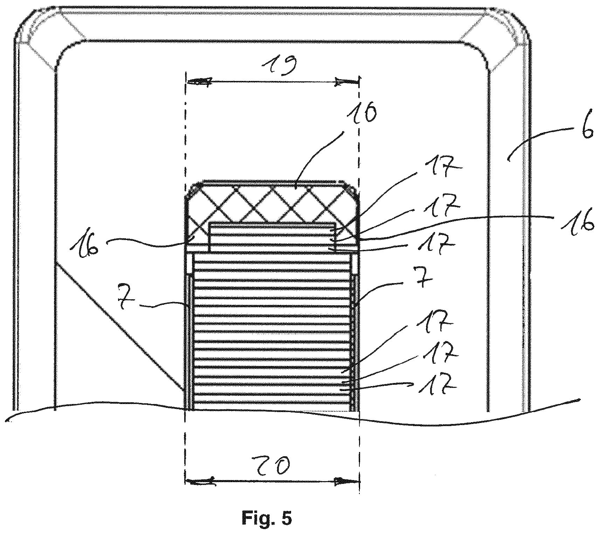

Figur 1 zeigt eine Explosionsdarstellung eines erfindungsgemäßen Stators 1. Der Stator 1 weist einen Statorrückschluss 2 auf, der näher in den Figuren 2 und 3 dargestellt ist. Der Statorrückschluss 2 weist einen hohlzylindrischen Rückschlusskörper 3 mit mehreren bezogen auf eine Achse 18 des Stators radial nach innen abstehenden Statorzähnen 4 auf, die zwischen sich Statornuten 5 definieren. Wie Figur 4 zeigt, sind die Statorzähne jeweils mit einer Statorspule 6 bewickelt. Zur elektrischen Isolierung zwischen Statorrückschluss und Statorspulen ist Isolationspapier zwischen den Statorspulen und den Statornuten eingelegt. Pro Statornut ist jeweils ein separates Isolationspapier vorgesehen. Die Isolationspapiere 7 sind zum einen in der Explosionsdarstellung aus Figur 1 zu erkennen. Im fertiggestellten Zustand des Stators sind die Isolationspapiere 7 auch in dem Längsschnitt aus Figur 5 durch einen der Statorzähne 4 zu erkennen.

Figur 1 zeigt, dass zur elektrischen Isolierung ferner die beiden axialen Enden 8 und 9 des Statorrückschlusses jeweils mit einer Kunststoffabdeckung 10, 11 abgedeckt sind.

In Figur 2 ist zu erkennen, dass die Statorzähne an den axialen Enden des Statorrückschlusses seitliche Aussparungen 12 aufweisen. Die Aussparungen 12 erstrecken sich zum einen entlang der beiden seitlichen Flanken der Statorzähne 4. Dieser mittlere Abschnitt der Aussparungen 12 ist in Figur 3 beispielhaft für den ganz rechts dargestellten Statorzahn 4 mit dem Bezugszeichen 13 versehen. Figur 3 zeigt auch, dass jeder Statorzahn an seinem radial innen gelegenen Ende zwei in Umfangsrichtung abstehende Nasen 21 aufweist, deren Spitzen 22 die größte Ausdehnung der Nasen in Umfangsrichtung markieren. Die Aussparungen 12 erstrecken sich auch entlang der Nasen 21, reichen jedoch nicht bis an die Spitzen 22 der Nasen 21 heran, um eine präzise Positionierung der einzelnen Statorbleche bei der Herstellung des Blechpakets zu ermöglichen, aus welchem der Statorrückschluss besteht. Der Abschnitt der Aussparungen 12, der sich entlang der jeweiligen Nase 21 erstreckt, ist in Figur 3 beispielhaft für den ganz rechts dargestellten Statorzahn mit dem Bezugszeichen 14 versehen. Zusätzlich erstrecken sich die Aussparungen 12 zumindest abschnittsweise auch entlang einer Innenseite des hohlzylindrischen Rückschlusskörpers 3. Dieser dritte Abschnitt der Aussparungen 12 ist in Figur 3 beispielhaft für den ganz rechts dargestellten Zahn mit dem Bezugszeichen 15 versehen. Diese sich entlang der Innenseite des hohlzylindrischen Rückschlusskörpers 3 erstreckende Aussparung 15 kann sich auch von einem Statorzahn 4 zum nächsten Statorzahn 4 erstrecken.

In Figur 2 ist zu erkennen, dass die Kunststoffabdeckung 11 (genauso wie die in dieser Darstellung nicht gezeigte zweite Kunststoffabdeckung 10) ringförmig ausgebildet ist und radial nach innen abstehende Zähne aufweist, die sich im zusammengebauten Zustand mit den Zähnen 4 des Statorrückschlusses 2 decken. An der Kunststoffabdeckung sind stegartige Vorsprünge 16 ausgebildet, die in die Aussparungen 12 am gegenüberliegenden axialen Ende des Statorrückschlusses eingreifen. Besonders anschaulich ist dies in dem in Figur 5 dargestellten Längsschnitt durch einen der Statorzähne 4 des erfindungsgemäßen Stators 1 zu erkennen. Die Aussparungen 12 können in den ersten ein bis sieben Statorblechen 17 am jeweiligen axialen Ende des Statorrückschlusses 2 ausgebildet sein. Besonders bevorzugt sind die Aussparungen 12 an den ersten zwei bis drei Statorblechen 17 am jeweiligen axialen Ende des Statorrückschlusses 2 ausgebildet. Figur 5 zeigt, dass die Aussparungen 12 nur in den ersten drei Statorblechen 17 am jeweiligen axialen Ende des Statorrückschlusses 2 ausgebildet sind. Die Aussparungen 12 bilden Eingriffe für die stegartigen Vorsprünge 16 an der Kunststoffabdeckung 10 und ermöglichen deshalb die Positionierung und das Halten der Kunststoffabdeckung 11 gegenüber dem Statorrückschluss 2. Durch die Aussparungen 12 wird jedoch der magnetische Fluss in dem Statorrückschluss 2 reduziert, wodurch sich das Drehmoment des Motors verkleinert. Deshalb sollten nicht zu viele Statorbleche 17 am axialen Ende des Statorrückschlusses 2 Aussparungen 12 aufweisen.

Beim gezeigten Ausführungsbeispiel überlagert das Isolationspapier 7 die Kunststoffabdeckungen 10, 11 bzw. deren Vorsprünge 16 nicht sondern es schließt, mit einem geringfügigen Abstand, axial an die Vorsprünge 16 der Kunststoffabdeckung an.

Die Aussparungen 12 und die Vorsprünge 16 der Kunststoffabdeckung 10 bzw. 11 sind derart bemessen, dass die Kunststoffabdeckung bzw. deren Vorsprünge nicht in die Statornuten 5 hineinragen. Ein erstes Querschnittsprofil, gebildet aus einem Statorzahn und den jeweils zugehörigen in die Aussparungen 12 eingreifenden Vorsprüngen 16 der Kunststoffabdeckung, weist eine in Umfangsrichtung gemessene erste Breite 19 auf, die beim Ausführungsbeispiel exakt einer ebenfalls in Umfangsrichtung gemessenen zweiten Breite 20 eines zweiten Querschnittsprofils desselben Statorzahns an einer axialen Position entspricht, an welcher die in Umfangsrichtung gemessene Breite des Statorzahn nicht durch die Aussparungen 12 reduziert sondern lediglich durch das Isolationspapier 7 geringfügig verbreitert ist.

Um einen möglichst großen Wickelraum zu erhalten, ist der Nutgrund 23 der Statornuten 5, wie in Figur 3 gezeigt, bezogen auf die Achse 18 des Stators 1 nach außen gewölbt. Er wird durch die zylindrische Innenseite des hohlen Rückschlusskörpers 3 gebildet.

Erfindungsgemäß besteht der Statorrückschluss 2 aus einem Blechpaket, das aus einteiligen ringförmigen Statorblechen 17 mit radial nach innen abstehenden Statorzähnen 4 zusammengesetzt ist. Die beiden Kunststoffabdeckungen 10 und 11 sind ebenfalls einteilig ausgeführt.

Zur Herstellung des erfindungsgemäßen Stators werden zunächst die einzelnen Statorbleche 17 ausgestanzt. Dabei werden bereits die lediglich in den jeweils letzten Statorblechen an den axialen Enden des Statorrückschlusses ausgebildeten Aussparungen 12 erzeugt. Die Statorbleche 17 werden dann exakt zueinander positioniert und mittels herkömmlicher Verfahren zu einem Blechpaket paketiert, welches den Statorrückschluss 2 bildet. Anschließend werden die Isolationspapiere 17 in axialer Richtung in die Statornuten 5 eingeschoben und die beiden Kunststoffabdeckungen 10 und 11 handfest auf die axialen Enden des Statorrückschlusses 2 aufgesteckt. Im letzten Schritt werden die Statorspulen 6 auf die Statorzähne 4 aufgewickelt.

## Patentansprüche

1. Stator (1) für einen mehrpoligen bürstenlosen Innenläufermotor, mit einem aus Statorblechen (17) zusammengesetzten Statorrückschluss (2), der einen hohlen Rückschlusskörper (3) mit mehreren, bezogen auf eine Achse (18) des Stators (1) radial nach innen abstehenden Statorzähnen (4) aufweist, die zwischen sich Statornuten (5) definieren und jeweils mit einer Statorspule (6) bewickelt sind, wobei zur elektrischen Isolierung zwischen Statorrückschluss (2) und Statorspulen (6) Isolationspapier (7) zwischen den Statorspulen (6) und den Statornuten (5) eingelegt ist, und die beiden axialen Enden (8, 9) des Statorrückschlusses (2) jeweils mit einer Kunststoffabdeckung (10, 11) abgedeckt sind, wobei die Statorzähne (4) an den axialen Enden (8, 9) des Statorrückschlusses (2) seitliche Aussparungen (12) aufweisen, durch die sich eine in Umfangsrichtung gemessene Breite der Statorzähne (4) reduziert, und wobei entsprechende Vorsprünge (16) der Kunststoffabdeckung (10, 11) in die Aussparungen (12) eingreifen, **wobei** die Statorbleche (17) als einteilige ringförmige Statorbleche mit radial nach innen abstehenden Zähnen ausgebildet und zu einem Blechpaket zusammengesetzt sind, wobei die Kunststoffabdeckung (10, 11) ebenfalls einteilig ausgeführt ist, **dadurch gekennzeichnet, dass** sich die Kunststoffabdeckungen (10, 11) beziehungsweise deren Vorsprünge (16) nicht mit dem Isolationspapier (7) überlagern sondern axial an das Isolationspapier (7) anschließen.

2. Stator (1) nach Anspruch 1, **dadurch gekennzeichnet, dass** ein erstes Querschnittsprofil, gebildet aus einem der Statorzähne (4) und den jeweils zugehörigen in die Aussparungen (12) eingreifenden Vorsprüngen (16) der Kunststoffabdeckung (10, 11), eine in Umfangsrichtung gemessene erste Breite (19) aufweist, die maximal einer ebenfalls in Umfangsrichtung gemessenen zweiten Breite (20) eines zweiten Querschnittsprofils desselben Statorzahns (4) an einer axialen Position entspricht, an welcher die in Umfangsrichtung gemessene Breite des Statorzahns (4) nicht durch die Aussparungen (12) reduziert ist.

3. Stator (1) nach Anspruch 2, **dadurch gekennzeichnet, dass** die erste Breite (19) der zweiten Breite (20) entspricht.

4. Stator (1) nach Anspruch 2 oder 3, **dadurch gekennzeichnet, dass** das zweite Querschnittsprofil durch den jeweiligen Statorzahn (4) und das zugehörige Isolierpapier (7) gebildet ist.

5. Stator (1) nach einem der Ansprüche 1 bis 4, **dadurch gekennzeichnet, dass** jeder Statorzahn (4) an seinem radial innen gelegenen Ende zwei in Umfangsrichtung abstehende Nasen (21) aufweist, wobei die Nasen jeweils eine Spitze (22) aufweisen, und wobei sich die seitlichen Aussparungen (12) der Statorzähne (4) und die entsprechenden Vorsprünge (16) der Kunststoffabdeckung (10, 11) zumindest abschnittsweise auch entlang der Nasen (21) erstrecken.

6. Stator (1) nach Anspruch 5, **dadurch gekennzeichnet, dass** sich die Aussparungen (12) nicht bis zu den Spitzen (22) der Nasen (21) erstrecken.

7. Stator (1) nach einem der Ansprüche 1 bis 6, **dadurch gekennzeichnet, dass** sich die Aussparungen (12) und die entsprechenden Vorsprünge (16) der Kunststoffabdeckung (10, 11) zumindest abschnittsweise auch entlang einer Innenseite des Rückschlusskörpers (3) erstrecken.

8. Stator (1) nach einem der Ansprüche 1 bis 7, **dadurch gekennzeichnet, dass** ein Nutgrund der Statornuten (5) bezogen auf die Achse (18) des Stators (1) nach außen gewölbt ist.

9. Stator (1) nach Anspruch 8, **dadurch gekennzeichnet, dass** der Nutgrund durch einen Abschnitt einer zylindrischen Innenseite des hohlen Rückschlusskörpers (3) gebildet ist.

10. Stator (1) nach einem der Ansprüche 1 bis 9, **dadurch gekennzeichnet, dass** die Aussparungen (12) in zumindest zwei der am jeweiligen axialen Ende (8, 9) gelegenen Statorbleche (17) des Blechpakets ausgebildet sind.

11. Verfahren zur Herstellung eines Stators (1) gemäß einem der Ansprüche 1 bis 10, wobei zunächst einteilige ringförmige Statorbleche (17) mit radial nach innen abstehenden Zähnen zu einem Blechpaket zusammengesetzt werden, so dass ein Statorrückschluss (2) gebildet wird, der einen hohlen Rückschlusskörper (3) mit mehreren, bezogen auf eine Achse (18) des Stators (1) radial nach innen abstehenden Statorzähnen (4) aufweist, die zwischen sich Statornuten (5) definieren, wobei die Statorzähne (4) an den axialen Enden (8, 9) des Statorrückschlusses (2) seitliche Aussparungen (12) aufweisen, durch die sich eine in Umfangsrichtung gemessene Breite der Statorzähne (4) reduziert,
wobei zur elektrischen Isolierung zwischen dem Statorrückschluss (2) und den auf die Statorzähne (4) zu wickelnden Statorspulen (6) anschließend Isolationspapier (7) in die Statornuten (5) eingelegt wird und die beiden axialen Enden (8, 9) des Statorrückschlusses (2) jeweils mit einer einteiligen Kunststoffabdeckung (10, 11) abgedeckt werden, so dass entsprechende Vorsprünge (16) der Kunststoffabdeckung (10, 11) in die Aussparungen (12) eingreifen,
und wobei die Statorzähne (4) anschließend jeweils mit einer Statorspule (6) bewickelt werden,
**dadurch gekennzeichnet, dass** sich die Kunststoffabdeckungen (10, 11) beziehungsweise deren Vorsprünge (16) nicht mit dem Isolationspapier (7) überlagern sondern axial an das Isolationspapier (7) anschließen.

12. Verfahren nach Anspruch 11, **dadurch gekennzeichnet, dass** das Isolationspapier (7) bezogen auf die Achse (18) des Stators (1) in axialer Richtung in die Statornuten (5) eingeschoben wird.

## Claims

1. Stator (1) for a multipolar brushless internal rotor motor, with a stator yoke (2) composed of stator plates (17), including a hollow yoke body (3) with multiple stator teeth (4) protruding radially inwards with regard to an axis (18) of the stator (1), said teeth defining between them stator grooves (5) and having a stator coil (6) wound around each of them, wherein an insulation paper (7) is placed between the stator coils (6) and the stator grooves (5) in order to provide an electric insulation between the stator yoke (2) and the stator coils (6), and both axial ends (8, 9) of the stator yoke (2) are each covered with a plastic cover (10, 11), wherein the stator teeth (4) comprise lateral recesses (12) at both axial ends (8, 9) of the stator yoke (2), whereby the width of the stator teeth (4) measured in a peripheral direction is reduced, and wherein corresponding projections (16) of the plastic cover (10, 11) engage into the recesses (12), wherein the stator plates (17) are constituted as one-piece, annular stator plates including teeth that protrude radially inwards and are assembled into a stack of plates, wherein the plastic cover (10, 11) is also implemented in one piece, **characterized in that** the plastic covers (10, 11) and their respective projections (16) are not overlaid with the insulation paper (7) but rather connect axially with the insulation paper (7).

2. Stator (1) according to claim 1, **characterized in that** a first cross-section formed by one of the stator teeth (4) and the corresponding projections (16) of the plastic cover (10, 11) engaging into the recesses (12) presents a first width (19) measured in a peripheral direction, which matches at most a second width (20) also measured in a peripheral direction of a second cross-section of the same stator tooth (4) at an axial position at which the width of the stator tooth (4) measured in a peripheral direction is not reduced by the recesses (12).

3. Stator (1) according to claim 2, **characterized in that** the first width (19) matches the second width (20).

4. Stator (1) according to claim 2 or 3, **characterized in that** the second cross-section is formed by the corresponding stator tooth (4) and the associated insulation paper (7).

5. Stator (1) according to one of claims 1 to 4, **characterized in that** each stator tooth (4) comprises two lugs (21) protruding in a peripheral direction at its radially inwards end, wherein the lugs each feature one spike (22), and wherein the lateral recesses (12) of the stator teeth (4) and the corresponding projections (16) of the plastic cover (10, 11) at least partially extend along the lugs (21).

6. Stator (1) according to claim 5, **characterized in that** the recesses (12) do not extend until the spikes (22) of the lugs (21).

7. Stator (1) according to one of claims 1 to 6, **characterized in that** the recesses (12) and the corresponding projections (16) of the plastic cover (10, 11) also extend at least partially along an inner side of the yoke body (3).

8. Stator (1) according to one of claims 1 to 7, **characterized in that** a groove bottom of the stator grooves (5) is curved outwards with regard to the axis (18) of the stator (1).

9. Stator (1) according to claim 8, **characterized in that** the groove bottom is formed by a section of a cylindrical inner side of the hollow yoke body (3).

10. Stator (1) according to one of claims 1 to 9, **characterized in that** the recesses (12) are formed in at least two of the stator plates (17) of the stack of plates that are located at the corresponding axial end (8, 9).

11. Production method of a stator (1) according to one of claims 1 to 10,
wherein one-piece annular stator plates (17) with teeth protruding radially inwards are first assembled into a stack of plates, whereby a stator yoke (2) is constituted, comprising a hollow yoke body (3) with multiple stator teeth (4) protruding radially inwards with regard to an axis (18) of the stator (1), which define stator grooves (5) between them, wherein the stator teeth (4) comprise lateral recesses (12) at the axial ends (8, 9) of the stator yoke (2), whereby the width of the stator teeth (4) measured in a peripheral direction is reduced,
wherein an isolation paper (7) is subsequently placed in the stator grooves (5) in order to provide an electric insulation between the stator yoke (2) and the stator coils (6) wound around the stator teeth (4) and both axial ends (8, 9) of the stator yoke (2) are each covered with a one-piece plastic cover (10, 11), so that corresponding projections (16) of the plastic cover (10, 11) engage into the recesses (12),
and wherein a stator coil (6) is subsequently wound around the stator teeth (4),
**characterized in that** the plastic covers (10, 11) and their respective projections (16) are not overlaid with the insulation paper (7) but rather connect axially with the insulation paper (7).

12. Method according to claim 11, **characterized in that** the insulation paper (7) is inserted in an axial direction into the stator grooves (5) with regard to the axis (18) of the stator (1).

## Revendications

1. Stator (1) pour un moteur à rotor interne sans balais multipolaire avec un noyau de stator (2) constitué de tôles de stator (17), comportant un corps de noyau creux (3) avec plusieurs dents de stator (4) qui ressortent radialement vers l'intérieur par rapport à un axe (18) du stator (1), qui définissent entre elles des encoches de stator (5) et avec une bobine de stator (6) enroulée autour de chacune d'entre elles, dans lequel, pour une isolation électrique entre le noyau de stator (2) et les bobines de stator (6), un papier d'isolation (7) est inséré entre les bobines de stator (6) et les encoches de stator (5), et les deux extrémités axiales (8, 9) du noyau de stator (2) sont recouvertes chacune d'un couvercle en plastique (10, 11), dans lequel les dents de stator (4) comportent aux extrémités axiales (8, 9) du noyau de stator (2) des renfoncements latéraux (12) qui réduisent la largeur des dents de stator (4) mesurée en direction périphérique, et dans lequel les projections correspondantes (16) du couvercle en plastique (10, 11) s'engagent dans les renfoncements (12), dans lequel les tôles de stator (17) sont constituées de tôles de stator annulaires en une seule pièce avec des dents ressortant radialement vers l'intérieur et constituant un paquet de tôles, dans lequel le couvercle en plastique (10, 11) est également réalisé en une seule pièce, **caractérisé en ce que** les couvercles en plastique (10, 11) et leurs projections respectives (16) ne sont pas recouverts par le papier d'isolation (7) mais se joignent plutôt axialement au papier d'isolation (7).

2. Stator (1) selon la revendication 1, **caractérisé en ce qu'**un premier profil transversal constitué par des projections (16) qui s'engagent avec les dents de stator (4) et les renfoncements (12) correspondantes du couvercle en plastique (10, 11) présente une première largeur (19) mesurée en direction périphérique, qui correspond au maximum à une deuxième largeur (20) également mesurée en direction périphérique d'un deuxième profil transversal de la même dent de stator (4) dans une position axiale où la largeur de la dent de stator (4) mesurée en direction périphérique n'est pas réduite par les renfoncements (12).

3. Stator (1) selon la revendication 2, **caractérisé en ce que** la première largeur (19) correspond à la deuxième largeur (20).

4. Stator (1) selon la revendication 2 ou 3, **caractérisé en ce que** le deuxième profil transversal est constitué par la dent de stator respective (4) et le papier d'isolation associé (7).

5. Stator (1) selon l'une des revendications 1 à 4, **caractérisé en ce que** chaque dent de stator (4) comporte deux ergots (21) ressortant en direction périphérique à son extrémité interne en direction radiale, dans lequel les ergots comportent chacun une pointe (22), et dans lequel les renfoncements latéraux (12) des dents de stator (4) et les projections correspondantes (16) du couvercle en plastique (10, 11) s'étendent aussi au moins partiellement le long des ergots (21).

6. Stator (1) selon la revendication 5, **caractérisé en ce que** les renfoncements (12) ne s'étendent pas jusqu'aux pointes (22) des ergots (21).

7. Stator (1) selon l'une des revendications 1 à 6, **caractérisé en ce que** les renfoncements (12) et les projections correspondantes (16) du couvercle en plastique (10, 11) s'étendent aussi au moins partiellement le long d'un côté interne du corps de noyau (3).

8. Stator (1) selon l'une des revendications 1 à 7, **caractérisé en ce qu'**un fond d'encoche des encoches de stator (5) est incurvé vers l'extérieur par rapport à l'axe (18) du stator (1).

9. Stator (1) selon la revendication 8, **caractérisé en ce que** le fond d'encoche est constitué par une section d'un côté interne cylindrique du corps de noyau creux (3).

10. Stator (1) selon l'une des revendications 1 à 9, **caractérisé en ce que** les renfoncements (12) sont constitués dans au moins deux des tôles de stator (17) du paquet de tôles situées à des extrémités axiales respectives (8, 9).

11. Procédé de fabrication d'un stator (1) selon l'une des revendications 1 à 10,
dans lequel des tôles de stator annulaires en une seule pièce (17) avec des dents ressortant radialement vers l'intérieur sont d'abord assemblées pour former un paquet de tôles, de manière à constituer un noyau de stator (2) qui comporte un corps de noyau creux (3) avec plusieurs dents de stator (4) ressortant radialement vers l'intérieur par rapport à un axe (18) du stator (1) et formant entre elles des encoches de stator (5), dans lequel les dents de stator (4) comportent aux extrémités axiales (8, 9) du noyau de stator (2) des renfoncements latéraux (12) qui réduisent la largeur des dents de stator (4) mesurée en direction périphérique,
dans lequel un papier d'isolation (7) est ensuite posé dans les encoches de stator (5) pour assurer une isolation électrique entre le noyau de stator (2) et les bobines de stator (6) à enrouler autour des dents de stator (4), et les deux extrémités axiales (8, 9) du noyau de stator (2) sont recouvertes chacune d'un couvercle en plastique en une seule pièce (10, 11), de telle sorte que les projections correspondantes (16) du couvercle en plastique (10, 11) s'engagent dans les renfoncements (12),
et dans lequel une bobine de stator (6) est ensuite enroulée autour de chacune des dents de stator (4),
**caractérisé en ce que** les couvercles en plastique (10, 11) et leurs projections respectives (16) ne sont pas recouverts par le papier d'isolation (7) mais se joignent plutôt axialement au papier d'isolation (7).

12. Procédé selon la revendication 11, **caractérisé en ce que** le papier d'isolation (7) est inséré dans les encoches de stator (5) en direction axiale par rapport à l'axe (18) du stator (1).
